# EUROPEAN PATENT APPLICATION

(11) **EP 4 005 775 A1**
(43) Date of publication of application: **01.06.2022**
(21) Application number: 21211156.1
(22) Date of filing: 29.11.2021
(51) Int. Cl.: B29C 64/112, B29C 64/40, B33Y 10/00, B33Y 30/00, B22F 10/00, B22F 12/00

(54) **THREE-DIMENSIONAL OBJECT PRODUCING METHOD, THREE-DIMENSIONAL OBJECT PRODUCING PROGRAM, AND THREE-DIMENSIONAL OBJECT PRODUCING APPARATUS**

(30) Priority: 30.11.2020 JP 2020198894
(71) Applicant: Ricoh Company, Ltd., Tokyo 143-8555 (JP)
(72) Inventor: MATSUMURA, Takashi, Tokyo, 143-8555 (JP); NIIMI, Tatsuya, Tokyo, 143-8555 (JP); SAITO, Takuya, Tokyo, 143-8555 (JP)
(74) Representative: Fairbairn, Angus Chisholm

(57) **Abstract**

Provided is a three-dimensional object producing method including a model part forming step of forming a model part formed of a model material and a support part forming step of forming a support part formed of a support material for supporting the model part. In the support part forming step, the model material is disposed in the support part, to form a detachment preventing part for preventing detachment of the model part in a manner that the detachment preventing part is continuous from the model part.

## Description

### BACKGROUND OF THE INVENTION

### Field of the Invention

The present disclosure relates to a three-dimensional object producing method, a three-dimensional object producing program, and a three-dimensional object producing apparatus.

### Description of the Related Art

Techniques called additive manufacturing (AM) have been known as techniques for forming three-dimensional stereoscopic objects. The additive manufacturing techniques calculate shapes of thinly sliced cross-sections taken with respect to the layer lamination direction, and form and laminate layers in accordance with the shape data, to form a three-dimensional object.

In recent years, among the additive manufacturing techniques, material jetting (MJ) methods that laminate layers of curable resins and form three-dimensional objects have been paid attention. When forming model parts, which are the main bodies of three-dimensional objects, the material jetting methods form support parts that support the model parts. Therefore, the material jetting methods can form shapes that are, in principle, difficult to form (e.g., shapes having overhang portions).

However, many UV-curable resins for forming model parts have a cure shrinkage property, and cure shrinkage after object formation may affect the object formation accuracy. Hence, various techniques for enhancing the dimensional accuracy have been proposed for the techniques for forming three-dimensional objects by the material jetting methods.

For example, a proposed three-dimensional object producing method includes a model part forming step of forming a model part formed of a model part material over a stage, a support part forming step of at least forming a support part material on a part or the whole of the rim of the model part seen in a plan view perspective and over the surface of the stage, and an anchor part forming step of forming an anchor part formed of the model part material at least over the surface of the stage in a manner that the anchor part penetrates the support part (for example, see Japanese Unexamined Patent Application Publication No. 2019-151097).

### SUMMARY OF THE INVENTION

According to one aspect of the present disclosure, a three-dimensional object producing method includes a model part forming step of forming a model part formed of a model material and a support part forming step of forming a support part formed of a support material for supporting the model part. In the support part forming step, the model material is disposed in the support part, to form a detachment preventing part for preventing detachment of the model part in a manner that the detachment preventing part is continuous from the model part.

### BRIEF DESCRIPTION OF THE DRAWINGS

FIG. 1 is a schematic view illustrating an example of a three-dimensional object producing apparatus;
FIG. 2A is a perspective view illustrating an example of a three-dimensional model;
FIG. 2B is a perspective view illustrating an example of an object of which model part at an overhang portion is supported by a support part;
FIG. 2C is a schematic cross-sectional view illustrating one cross-section of the object of FIG. 2B;
FIG. 3 is a schematic cross-sectional view of the object of FIG. 2B;
FIG. 4 is a plan view illustrating a state of columnar structures formed in the support part of FIG. 3, seen from right above;
FIG. 5 is a schematic cross-sectional view of the object of FIG. 2B in a different mode;
FIG. 6 is a schematic view illustrating an object (sphere) formed in Example 1;
FIG. 7 is a schematic cross-sectional view illustrating an object formed state in Example 1;
FIG. 8 is a schematic cross-sectional view illustrating an object formed state in Example 2;
FIG. 9 is a schematic cross-sectional view illustrating an object formed state in Example 3;
FIG. 10 is a schematic cross-sectional view illustrating an object formed state in Example 4;
FIG. 11 is a block diagram illustrating an example of a control unit of a three-dimensional object producing apparatus; and
FIG. 12 is a flowchart illustrating an example of a flow of an object forming process according to a three-dimensional object producing method of the present disclosure.

### DESCRIPTION OF THE EMBODIMENTS

### (Three-dimensional object producing method)

A three-dimensional object producing method of the present disclosure includes a model part forming step of forming a model part formed of a model material and a support part forming step of forming a support part formed of a support material for supporting the model part. In the support part forming step, the model material is disposed in the support part, to form a detachment preventing part for preventing detachment of the model part in a manner that the detachment preventing part is continuous from the model part. The three-dimensional object producing method further includes other steps as needed.

The present disclosure has an object to provide a three-dimensional object producing method that can produce a three-dimensional object highly accurately and stably.

The present disclosure can provide a three-dimensional object producing method that can produce a three-dimensional object highly accurately and stably.

Three-dimensional object forming techniques by existing material jetting methods can increase the dimensional accuracy of the object forming layers immediately after formation, but have a problem that three-dimensional objects tend to warp and detach during or after formation of the whole three-dimensional objects.

Specifically, three-dimensional objects according to the three-dimensional object forming techniques by material jetting methods tend to warp because the objects have preserved the internal stress that occurred when the films formed of the model material were cured. This is because the films formed of the model material have a high elastic modulus in order to secure the strength of the three-dimensional objects. Model materials and support materials shrink when cured during or after object formation and when cooled. Among these materials, the model materials gain an increased elastic modulus through curing, and consequently preserve shrinkage-induced internal stress without being relaxed. As a result, the model parts warp. On the other hand, support parts have a low elastic modulus compared with model parts, and shrinkage-induced internal stress in the support parts tends to be relaxed. Hence, the support parts are not likely to warp. Here, there is a risk that the model parts may detach from the support parts due to the warpage of the model parts. Then, for fear of this, if a model material having a high adhesiveness with the support material is selected in order that the model part may not detach from the support part, this in turn makes it difficult to remove the support part from the model part when object formation is completed. This is a cause for which the appearance of the objects is spoiled, and also restricts the range of selection of the model materials. As can be seen, when model materials having a high cure shrinkage property are used, model parts may be detached from support parts due to warpage of the model parts. When brittle support materials are used, support parts may collapse due to distortion by warpage of the model parts.

Hence, the present disclosure includes a model part forming step of forming a model part formed of a model material and a support part forming step of forming a support part formed of a support material for supporting the model part, wherein in the support part forming step, the model material is disposed in the support part, to form a detachment preventing part for preventing detachment of the model part in a manner that the detachment preventing part is continuous from the model part. As a result, the detachment preventing part is formed embedded in the support part, producing an anchor effect that can prevent detachment of the model part from the support part, making it possible to form objects highly accurately and stably.

In one embodiment of the present disclosure, a support part is formed over a stage, and a detachment preventing part is free of contact with the stage. That is, the detachment preventing part needs not be formed in a manner to penetrate the support part, but can have an anchor effect and prevent detachment of a model part from the support part so long as a columnar structure constituting the detachment preventing part is embedded in the support part by some length (e.g., about half the length of a columnar structure that penetrates the support part).

In an embodiment of the present disclosure, for example, the shape, size, and structure of the detachment preventing part are not particularly limited and may be appropriately selected depending on the intended purpose, so long as the detachment preventing part is formed of the model material in a support part and is continuous from the model part and able to prevent detachment of the model part. It is preferable that the detachment preventing part have a columnar structure.

In a preferred embodiment of the present disclosure, a plurality of columnar structures formed of the model material are provided in a support part as detachment preventing parts. Hence, the columnar structures formed embedded in the support part function as anchors and can prevent detachment of a model part from the support part. Moreover, when taking out the model part from the support part, it is easy to remove the thin columnar structures by bending them by hands.

In an embodiment of the present disclosure, a bridging structure is formed between adjoining columnar structures. This enables a high anchor effect with a small diameter of the columnar structures. Therefore, after object formation is completed, it is easy to remove the columnar structures.

In another embodiment of the present disclosure, it is preferable that the model material and the support material be curable liquid materials, more preferably active-energy-ray-curable liquid materials. When the model material and the support material are active-energy-ray-curable liquid materials, it is possible to form objects using a three-dimensional object producing apparatus of a common material jetting type. As a result, it is possible to simplify the process and shorten the object formation time.

Here, a model part is a part constituting a three-dimensional object of the present disclosure, and a hardened product of the model material. The shape of the model part is not particularly limited and may be appropriately selected depending on the intended purpose. Examples of the shape of the model part include a film and a layer.

A support part is disposed at a position to support a model part against the gravitational direction, contacts the model part, and functions to support the model part from below the model part until when the model part cures in order to hold the three-dimensional object at a predetermined position.

A support part is a cured product of the support material. The shape of the support part is not particularly limited and may be appropriately selected depending on the intended purpose. Examples of the shape of the support part include a film and a layer.

### <Model part forming step>

The model part forming step is a step of forming a model part formed of the model material, and is performed by a model part forming unit. A model part is formed over a stage or a support part.

### -Stage-

Model parts and support parts are laminated over the stage, and a three-dimensional object during or after object formation is formed over the stage.

The shape and size of the stage are not particularly limited and may be appropriately selected depending on the intended purpose so long as the stage can support a three-dimensional object during or after object formation. In terms of stably placing a three-dimensional object during or after object formation, a shape of a flat plate set in parallel with a horizontal plane is preferable.

### <Support part forming step>

The support part forming step is a step of forming a support part formed of the support material in order to support a model part, and is performed by a support part forming unit.

In the support part forming step, the model material is disposed in a support part to form a detachment preventing part that is continuous from the model part to prevent detachment of the model part. That is, together with formation of a support part, a detachment preventing part is formed at a predetermined position. Specifically, a plurality of columnar structures are formed continuously from a model part in a region where a support part is formed as an orthographic projection of the model part based on standard triangulated language (STL) data of the model part.

A support part is formed at a position at which a model part is orthographically projected, based on STL data obtained by adding columnar structures to STL data of the support part. Hence, when the support part is formed, columnar structures are formed in a manner to be embedded in the support part. This makes it possible to suppress warpage of the model part and detachment of the model part from the support part and form an object highly accurately and stably.

A columnar structure has a shape of one column. However, a bridging structure may be formed between adjoining columnar structures. It is preferable to form columnar structures in a direction perpendicular to a model part. It is optional to form columnar structure in a direction oblique to a model part.

The diameter and density of the columnar structures can be set depending on the shape of a model part. Columnar structures having a higher density and a larger diameter can better suppress warpage and detachment from a support part, but take greater efforts for removable from a model part after object formation is completed and also need more bothersome surface treatment. Taking into these factors into consideration, the diameter of the columnar structures is preferably 50 micrometers or greater but 5 mm or less, and more preferably 100 micrometers or greater but 2 mm or less. The density of the columnar structures is preferably 20 columns/cm² or less, more preferably 10 columns/cm² or less, and yet more preferably 1 column/cm² or greater but 10 columns/cm² or less.

The method for forming a model part and a support part in the model part forming step and the support part forming step is not particularly limited and may be appropriately selected depending on the intended purpose. Examples of the method include a method of discharging and curing the model material and the support material.

The method for discharging the model material and the support material is not particularly limited and may be appropriately selected depending on the intended purpose. Examples of the method include a dispenser method, a spray method, and an inkjet method. Among these methods, an inkjet method is preferable.

In an inkjet method, there is a nozzle through which the model material can be discharged. As the nozzle, a nozzle of a known inkjet printer can be suitably used.

Examples of the method for curing the model material and the support material include curing by heating or curing with active energy rays when the model material and the support material have a photocurability or a thermosetting property. Among these methods, curing with active energy rays is preferable.

Active energy rays are not particularly limited, so long as they are able to give necessary energy for allowing polymerization reaction of polymerizable components in the active-energy-ray-curable liquids to proceed. Examples of the active energy rays include electron beams, α-rays, β-rays, γ-rays, and X-rays, in addition to ultraviolet rays. When a light source having a high energy is used, polymerization reaction can be allowed to proceed without a polymerization initiator. In addition, in the case of irradiation with ultraviolet ray, mercury-free is preferred in terms of protection of environment.

Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

Examples of the curing unit include ultraviolet (UV) irradiation lamps and electron beams. It is preferable that the curing unit include an ozone removing mechanism.

The kinds of ultraviolet (UV) irradiation lamps include high-pressure mercury lamps, ultrahigh-pressure mercury lamps, and metal halides.

Ultrahigh-pressure mercury lamps are point light sources. Deep UV-type ultrahigh-pressure mercury lamps combined with optical systems for enhancement of the light utilization efficiency can emit short wavelength ranges.

Metal halides have a wide wavelength range and are effective for colored materials. Halogenated products of metals such as Pb, Sn, and Fe are used and can be selected depending on the absorption spectrum of a photopolymerization initiator. The lamp used for curing is not particularly limited and may be appropriately selected depending on the intended purpose. For example, commercially available lamps such as H LAMP, D LAMP, and V LAMP available from Fusion Systems Corporation can be used.

When a radical polymerizable monomer or oligomer is used as the curable liquid material, it is preferable to perform film formation and the curing step in an environment having a low oxygen concentration, more preferably a space purged with, for example, nitrogen.

### <Other steps>

The other steps are not particularly limited and may be appropriately selected depending on the intended purpose. Examples of the other steps include a removing step, a foundation forming step, a three-dimensional object polishing step, and a three-dimensional object washing step.

### -Removing step-

The removing step is a step of removing a support part from a formed three-dimensional object including a model part and the support part and also removing the columnar structures from the model part, and is performed by a removing unit.

Examples of the removing method include a trimming method, a method of dissolution in a liquid, a removing method by dipping in a liquid, a method of applying a temperature, an ultrasonic vibration method, and a method of applying energy by stirring. These methods may be appropriately combined.

Examples of the method for removing the columnar structures from the model part include a method of bending the columnar structures by hands and a method of cutting the columnar structures with a nipper.

### -Foundation forming step-

The foundation forming step forms a foundation formed of the model material over the stage, between a model part and the surface of the stage. Here, the support part forming step additionally forms a support part between the model part and the foundation. That is, the foundation, the support part, and the three-dimensional object are laminated in this order over the stage. In this case, when detaching the three-dimensional object from the stage, the three-dimensional object has protection and it is possible to detach the whole three-dimensional object easily from the stage.

The foundation is a cured product of the model material, and can be easily detached from the stage with, for example, a spatula.

The shape of the foundation is not particularly limited and may be appropriately selected depending on the intended purpose. Examples of the shape of the foundation include a film and a layer.

The details of the model material and the support material, each of which is an object forming material used in the model part forming step and the support part forming step, will be described.

The object forming material is not particularly limited and may be appropriately selected depending on the properties needed for constituting a main body forming a three-dimensional object (model part). Examples of the object forming material include a model material. When using a support part for shape support as needed during formation of a three-dimensional object, examples of the object forming material include a support material for forming the support part.

The model material is a material for forming a part constituting a model part.

In the present disclosure, a model part is a part constituting a main body forming a three-dimensional object, and is formed by lamination of model layers.

In the present disclosure, a support part is a part that holds a three-dimensional object at a predetermined position until a model part solidifies, and is formed by lamination of support layers. For example, a support part is a part that is disposed at a position to support a model part against the gravitational direction, contacts the model part, and supports the model part from below the model part. In production of a three-dimensional object, a support part is typically detached from a model part in the end, and only the model part constitutes the three-dimensional object.

In a preferred embodiment, the support material is different from the model material (in terms of, for example, composition and concentration), and it is more preferable that a cured product of the support material have a property that makes the cured product of the support material easily detachable from a model part, such as water solubility, deliquescency, and disintegrability.

The object forming materials such as the model material and the support material are not particularly limited and may be appropriately selected depending on the intended purpose so long as the object forming materials are liquid materials that cure in response to application of energy such as light or heat. The object forming materials contain a polymerizable monomer and a polymerizable oligomer, and further contain other components as needed. Among these materials, preferable are materials having liquid properties such as viscosity and surface tension that enable the object forming materials to be discharged from an object forming material discharging head used in, for example, an object forming material jetting printer.

### <Polymerizable monomer>

Examples of the polymerizable monomer include monofunctional monomers and multifunctional monomers. One of these polymerizable monomers may be used alone or two or more of these polymerizable monomers may be used in combination.

### -Monofunctional monomer-

Examples of the monofunctional monomers include acrylamide, N-substituted acrylamide derivatives, N,N-disubstituted acrylamide derivatives, N-substituted methacrylamide derivatives, N,N-disubstituted methacrylamide derivatives, and acrylic acid. One of these monofunctional monomers may be used alone or two or more of these monofunctional monomers may be used in combination. Among these monofunctional monomers, acrylamide, N,N-dimethyl acrylamide, N-isopropyl acrylamide, acryloyl morpholine, hydroxyethyl acrylamide, and isobornyl acrylate are preferable.

The content of the monofunctional monomer is not particularly limited, may be appropriately selected depending on the intended purpose, and is preferably 0.5% by mass or greater but 90% by mass or less relative to the total amount of the object forming material.

Monofunctional monomers other than the above are not particularly limited and may be appropriately selected depending on the intended purpose. Examples of such monofunctional monomers include 2-ethylhexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonyl phenol (meth)acrylate. One of these monofunctional monomers may be used alone or two or more of these monofunctional monomers may be used in combination.

### -Multifunctional monomer-

The multifunctional monomer is not particularly limited and may be appropriately selected depending on the intended purpose. Examples of the multifunctional monomer include difunctional monomers and trifunctional or higher monomers. One of these multifunctional monomers may be used alone or two or more of these multifunctional monomers may be used in combination.

Examples of the difunctional monomers include tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. One of these difunctional monomers may be used alone or two or more of these difunctional monomers may be used in combination.

Examples of the trifunctional or higher monomers include trimethylolpropane tri(meth)acrylate, pentaerythritol tri(meth)acrylate, dipentaerythritol hexa(meth)acrylate, triallyl isocyanurate, ε-caprolactone-modified dipentaerythritol tri(meth)acrylate, ε-caprolactone-modified dipentaerythritol tetra(meth)acrylate, ε-caprolactone-modified dipentaerythritol penta(meth)acrylate, ε-caprolactone-modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, and penta(meth)acrylate ester. One of these trifunctional or higher monomers maybe used alone or two or more of these trifunctional or higher monomers may be used in combination.

### -Polymerizable oligomer-

As the polymerizable oligomer, one of low-molecular-weight bodies of the above-described monofunctional monomers or the above-described monofunctional monomers that contain a reactive unsaturated binding group at an end may be used alone or two or more of them may be used in combination.

### -Other components-

The other components are not particularly limited and may be appropriately selected depending on the intended purpose. Examples of the other components include a surfactant, a polymerization inhibitor, a polymerization initiator, a colorant, a viscosity modifier, a tackifier, an antioxidant, an age resistor, a crosslinking promoter, an ultraviolet absorbent, a plasticizer, a preservative, and a dispersant.

### --Surfactant--

Examples of the surfactant include surfactants having a molecular weight of 200 or greater but 5,000 or less, specifically, PEG-type nonionic surfactants [e.g., an adduct of nonylphenol with from 1 through 40 moles of ethylene oxide (hereinafter abbreviated as "EO") and an adduct of stearic acid with from 1 through 40 moles of EO], polyvalent alcohol-type nonionic surfactants (e.g., sorbitan palmitic acid monoester, sorbitan stearic acid monoester, and sorbitan stearic acid triester), fluorine-containing surfactants (e.g., an adduct of perfluoroalkyl with from 1 through 50 moles of EO, perfluoroalkyl carboxylic acid salt, and perfluoroalkyl betaine), and modified silicone oils [e.g., polyether-modified silicone oils and (meth)acrylate-modified silicone oils]. One of these surfactants may be used alone or two or more of these surfactants may be used in combination.

The content of the surfactant is not particularly limited, may be appropriately selected depending on the intended purpose, and is preferably 3% by mass or less and more preferably 0.1% by mass or greater but 5% by mass or less relative to the total amount of the object forming material.

### --Polymerization inhibitor--

Examples of the polymerization inhibitor include phenol compounds [e.g., hydroquinone, hydroquinone monomethyl ether, 2,6-di-t-butyl-p-cresol, 2,2-methylene-bis-(4-methyl-6-t-butylphenol), 1, 1,3-tris-(2-methyl-4-hydroxy-5-t-butylphenyl)butane], and sulfur compounds [e.g., dilauryl thiodipropionate], phosphorus compounds [e.g., triphenyl phosphite], and amine compounds [e.g., phenothiazine]. One of these polymerization inhibitors may be used alone or two or more of these polymerization inhibitors may be used in combination.

The content of the polymerization inhibitor is not particularly limited, may be appropriately selected depending on the intended purpose, and is preferably 5% by mass or less and more preferably 0.1% by mass or greater but 5% by mass or less relative to the total amount of the object forming material.

### --Polymerization initiator--

Examples of the polymerization initiator include a thermal polymerization initiator and a photopolymerization initiator. Among these polymerization initiators, a photopolymerization initiator is preferable in terms of storage stability.

As the photopolymerization initiator, an arbitrary substance that produces radicals when irradiated with light (particularly, ultraviolet rays having a wavelength of from 220 nm through 400 nm) can be used.

Examples of the photopolymerization initiator include acetophenone, 2,2-diethoxyacetophenone, p-dimethylaminoacetophenone, benzophenone, 2-chlorobenzophenone, p,p'-dichlorobenzophenone, p,p-bisdiethyl aminobenzophenone, Michler ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methyl propan-1-one, methyl benzoyl formate, 1-hydroxycyclohexyl phenyl ketone, azobis isobutyronitrile, benzoyl peroxide, and di-tert-butyl peroxide. One of these photopolymerization initiators may be used alone or two or more of these photopolymerization initiators may be used in combination.

The thermal polymerization initiator is not particularly limited and may be appropriately selected depending on the intended purpose. Examples of the thermal polymerization initiator include azo-based initiators, peroxide initiators, persulfate initiators, and redox (oxidoreduction) initiators.

Examples of the azo-based initiators include VA-044, VA-46B, V-50, VA-057, VA-061, VA-067, VA-086, 2,2'-azobis (4-methoxy-2,4-dimethyl valeronitrile) (VAZO 33), 2,2'-azobis (2-amidinopropane)dihydrochloride (VAZO 50), 2,2'-azobis (2,4-dimethyl valeronitrile) (VAZO 52), 2,2'-azobis (isobutyronitrile) (VAZO 64), 2,2'-azobis-2-methyl butyronitrile (VAZO 67), and 1,1-azobis (1-cyclohexane carbonitrile) (VAZO 88) (all available from DuPont Chemical Company), and 2,2'-azobis (2-cyclopropyl propionitrile) and 2,2'-azobis (methyl isobutyrate) (V-601) (both available from Wako Pure Chemical Industries, Ltd.).

Examples of the peroxide initiator include benzoyl peroxide, acetyl peroxide, lauroyl peroxide, decanoyl peroxide, dicetyl peroxydicarbonate, di(4-t-butylcyclohexyl)peroxy dicarbonate (product name: PERKADOX 16S, available from Akzo Nobel N.V.), di(2-ethylhexyl)peroxy dicarbonate, t-butyl peroxy pivalate (product name: LUPERSOL 11, available from Elf Atochem Inc.), t-butyl peroxy-2-ethyl hexanoate (product name: TRIGONOX 21-C50, available from Akzo Nobel N.V.), and dicumyl peroxide.

Examples of the persulfate initiator include potassium persulfate, sodium persulfate, and ammonium persulfate.

Examples of the redox (oxidoreduction) initiator include combinations of persulfate initiators with reductants such as sodium hydrogen metabisulfite and sodium hydrogen sulfite, systems based on organic peroxides and tertiary amines (e.g., a system based on benzoyl peroxide and dimethyl aniline), and systems based on organic hydroperoxides and transition metals (e.g., a system based on cumen hydroperoxide and cobalt naphthate).

The content of the polymerization initiator is not particularly limited, may be appropriately selected depending on the intended purpose, and is preferably 10% by mass or less and more preferably 5% by mass or less relative to the total amount of the object forming material.

### --Colorant--

As the colorant, dyes and pigments that dissolve or stably disperse in the object forming material and have an excellent thermal stability are suitable. Among such dyes and pigments, solvent dyes are preferable. Two or more kinds of colorants may be timely mixed for, for example, color adjustment.

In the three-dimensional object producing method of the present disclosure, it is particularly preferable to use a hydrogel precursor liquid as the object forming material, in terms of forming a soft structure that can be used as a scaffold material for medical organ models and cells.

### <Hydrogel precursor liquid>

A hydrogel precursor liquid contains water and a hydrogel precursor, preferably contains a water-dispersible mineral, and further contains other components as needed.

### -Water-

As the water, for example, pure water such as ion-exchanged water, ultrafiltrated water, reverse osmotic water, and distilled water, and ultrapure water can be used.

Other components such as an organic solvent may be dissolved or dispersed in the water for, for example, impartment of a moisture retaining property, impartment of an antibacterial property, impartment of conductivity, and adjustment of hardness.

### -Hydrogel precursor-

The hydrogel precursor contains a polymerizable monomer that can polymerize in response to irradiation with active energy rays (e.g., ultraviolet rays) and form a polymer having a three-dimensional network structure. Hence, when the hydrogel precursor liquid is irradiated with active energy rays, the three-dimensional network structure of the polymer absorbs the water of the solvent and forms a hydrogel.

Examples of the polymerizable monomer may include the same as described above, and specifically include acrylamide, N-substituted acrylamide derivatives, N,N-disubstituted acrylamide derivatives, N-substituted methacrylamide derivatives, and N,N-disubstituted methacrylamide derivatives. Specific examples of the polymerizable monomer include acrylamide, N,N-dimethyl acrylamide, and N-isopropyl acrylamide. One of these polymerizable monomers may be used alone or two or more of these polymerizable monomers may be used in combination. In an embodiment, the monofunctional monomer described above and the multifunctional monomer described above are used in combination.

When the polymerizable monomer is polymerized, a water-soluble organic polymer containing, for example, an amide group, an amino group, a hydroxyl group, a tetramethyl ammonium group, a silanol group, and an epoxy group is obtained. The water-soluble organic polymer containing, for example, an amide group, an amino group, a hydroxyl group, a tetramethyl ammonium group, a silanol group, and an epoxy group is a constituent component advantageous for maintaining the strength of a water-based gel.

The content of the polymerizable monomer is not particularly limited, may be appropriately selected depending on the intended purpose, and is preferably 0.5% by mass or greater but 20% by mass or less relative to the total amount of the hydrogel precursor liquid.

### -Water-dispersible mineral-

The water-dispersible mineral is not particularly limited and may be appropriately selected depending on the intended purpose. Examples of the water-dispersible mineral include a layered clay mineral.

The layered clay mineral is a clay mineral having a layered crystalline structure, and preferably a material uniformly dispersible in water at a primary crystal level. Examples of the layered clay mineral include water-swellable smectite and water-swellable mica. More specific examples include water-swellable hectorite containing sodium as interlayer ions, water-swellable montmorillonite, water-swellable saponite, and water-swellable synthetic mica.

As the layered clay mineral, one of the examples described above may be used alone or two or more of the examples described above may be used in combination, or an appropriately synthesized product or a commercially available product may be used.

Examples of the commercially available product include synthetic hectorite (LAPONITE XLG, available from Rockwood), SWN (available from Coop Chemical Ltd.), and fluorinated hectorite SWF (available from Coop Chemical Ltd.).

The content of the water-dispersible mineral is not particularly limited, may be appropriately selected depending on the intended purpose, and is preferably 1% by mass or greater but 40% by mass or less relative to the total amount of the hydrogel precursor liquid.

### -Other components-

The other components are not particularly limited and may be appropriately selected depending on the intended purpose. Examples of the other components include as a stabilizer, a surface treatment agent, a photopolymerization initiator, a colorant, a viscosity modifier, a tackifier, an antioxidant, an age resistor, a crosslinking promoter, an ultraviolet absorbent, a plasticizer, a preservative, and a dispersant.

The stabilizer is used for stabilizing dispersion of the water-swellable layered clay mineral and maintaining a sol state. In an inkjet method, the stabilizer is used as needed for stabilizing liquid properties.

Examples of the stabilizer include high-concentration phosphates, glycols, and nonionic surfactants.

Examples of the surface treatment agent include polyester resins, polyvinyl acetate resins, silicone resins, coumarone resins, fatty acid esters, glycerides, and waxes.

A three-dimensional object producing method of the present disclosure and a three-dimensional object producing apparatus that performs the producing method will be described below.

The object forming materials including the model material and the support material are loaded into the three-dimensional object producing apparatus.

The three-dimensional object producing apparatus used in the present disclosure is a three-dimensional object producing apparatus of a common material jetting type using a model material and a support material having UV curability.

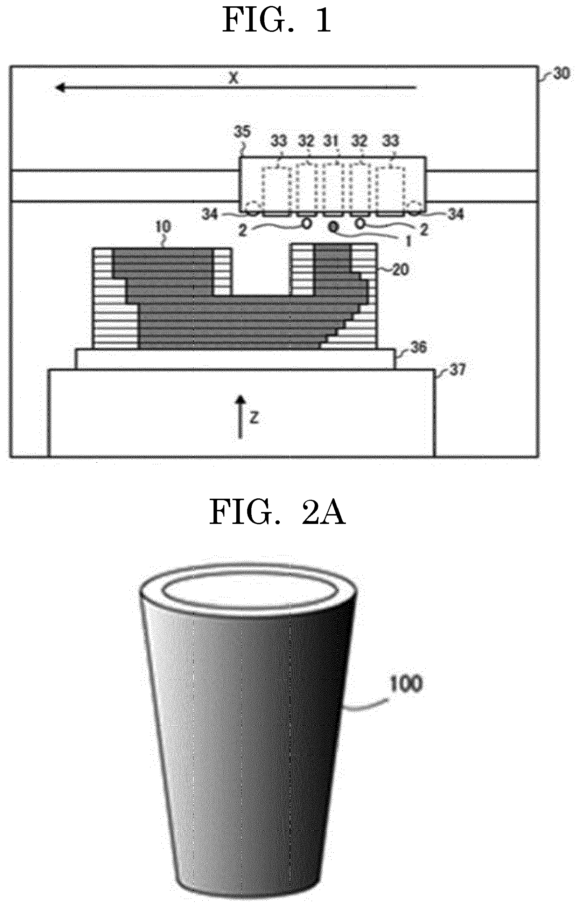

FIG. 1 is a schematic view illustrating an example of the three-dimensional object producing apparatus. The three-dimensional object producing apparatus 30 of FIG. 1 includes head units 31 and 32, an ultraviolet irradiator 33, a roller 34, a carriage 35, and a stage 37. The head unit 31 is configured to discharge a model material 1. The head unit 32 is configured to discharge a support material 2. The ultraviolet irradiator 33 is configured to irradiate and cure the discharged model material 1 and support material 2 with ultraviolet rays. The roller 34 is configured to smooth liquid films of the model material 1 and the support material 2. The carriage 35 is configured to reciprocably move each unit such as the head units 31 and 32 in the X direction of FIG. 1. The stage 37 is configured to move a substrate 36 in the Z direction illustrated in FIG. 1 and in the Y direction, which is the direction perpendicular to the sheet of FIG. 1. Instead of the stage 37, the carriage 35 may move in the Y direction.

When there are a plurality of model materials color by color, the three-dimensional object producing apparatus 30 may include a plurality of head units 31 configured to discharge the model materials of these colors.

As the nozzles of the head units 31 and 32, nozzles of a known inkjet printer can be suitably used.

Examples of the metal that can be used for the roller 34 include SUS300 series, SUS400 series, SUS600 series, hexavalent chromium, silicon nitride, and tungsten carbide. Moreover, any of these metals may be coated with, for example, fluorine or silicone and used for the roller 34. Among these metals, SUS600 series is preferable in terms of strength and processability.

When using the roller 34, the three-dimensional object producing apparatus 30 laminates layers while moving the stage 37 downward in accordance with the number of layers laminated, in order to maintain a constant gap between the roller 34 and the surface of the object. It is preferable that the roller 34 adjoin the ultraviolet irradiator 33.

In order to prevent drying of the ink during suspension, the three-dimensional object producing apparatus 30 may include a unit such as a cap configured to block the nozzles of the head units 31 and 32. In order to prevent nozzle clogging during a continuous use for a long time, the three-dimensional object producing apparatus 30 may include a maintenance mechanism configured to maintain the heads.

### <Method for generating three-dimensional object production data>

Production data for producing a three-dimensional object (hereinafter, may be referred to as "object formation data") is generated by, for example, an object formation data generating apparatus.

The method for generating object formation data will be schematically described below. The object formation data generating apparatus configured to generate object formation data and the generating method will be described in more detail in a section below (Method for generating three-dimensional object formation data).

FIG. 2A is an exemplary view illustrating an example of a three-dimensional model representing a three-dimensional object to be formed as a three-dimensional model. The three-dimensional model 100 is, for example, three-dimensional data such as surface data and solid data of a three-dimensional shape designed with a three-dimensional CAD or of a three-dimensional shape scanned with a three-dimensional scanner or a digitizer. The three-dimensional data may be converted to a standard triangulated language (STL) format representing the surface of the three-dimensional model as an aggregate of triangles.

The object formation data generating apparatus identifies a bottom surface from the input three-dimensional data. The method for identifying a bottom surface is not particularly limited. Examples of the method include a method of determining the direction of a three-dimensional coordinate system along which the shortest dimension of the three-dimensional model put in the three-dimensional coordinate system extends as the Z axis, and determining the contact point between the plane orthogonal to the Z axis and the three-dimensional model as a bottom surface.

The object formation data generating apparatus generates two-dimensional data representing cross-sectional surfaces of the three-dimensional model sliced in the direction parallel with the bottom surface at regular intervals in the Z axis direction. In this case, the object formation data generating apparatus calculates the projected areas of the three-dimensional models on the X-Y plane, the X-Z plane, and the Y-Z plane. The object formation data generating apparatus slices a block shape within which the calculated projected areas can be accommodated, by the thickness of one layer in parallel with the X-Y plane.

The thickness of one layer is typically about 20 micrometers or greater but 60 micrometers or less, although the thickness of one layer depends on the material used.

The object formation data generating apparatus may be configured to be automatically set as to the data processes such as generation of two-dimensional data in accordance with designation of the material to be used.

When the three-dimensional model has an overhang portion like the curved surface illustrated by gradation in FIG. 2A, the object formation data generating apparatus generates data in a manner that the object will be formed while the model part at the overhang portion is supported by a support part.

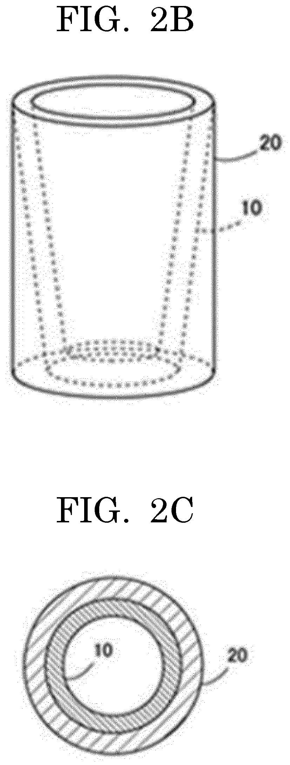

FIG. 2B is a schematic view illustrating an example of the object to be formed of a model part and a support part, or more specifically, a schematic view illustrating an example of an object of which model part 10 at the overhang portion is supported by a support part 20.

The object formation data generating apparatus adds pixels representing the support part to each generated two-dimensional data, at the bottom surface side of the overhang portion. Two-dimensional data to be generated finally represents one cross-section of the object and includes pixels representing the model part and pixels representing the support part.

FIG. 2C is a schematic view illustrating one cross-section of the object of FIG. 2B.

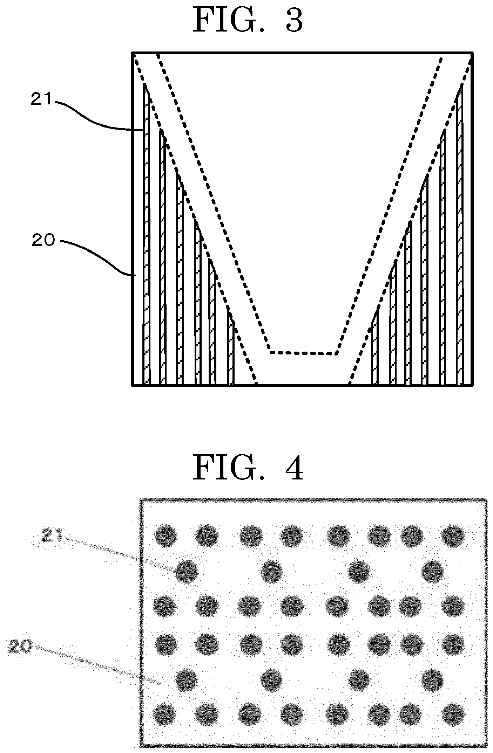

FIG. 3 is a schematic cross-sectional view of the object of FIG. 2B, illustrating that columnar structures 21 are formed in the support part 20, which is formed for the overhang portion, in a manner that the columnar structures 21 are embedded in the support part 20 in a penetrating manner. FIG. 4 illustrates the state of the columnar structures 21 embedded in the support part 20 when seen from right above.

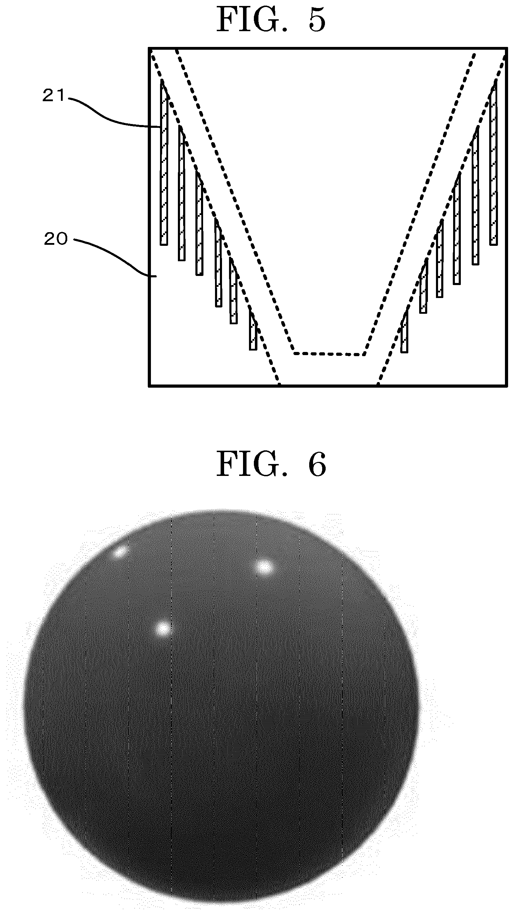

FIG. 5 is a schematic cross-sectional view of the object of FIG. 2B, illustrating that columnar structures 21 are formed in the support part 20, which is formed for the overhang portion, in a manner that the columnar structures 21 are embedded halfway into the support part 20 (for example, by about half the length of the penetrating columnar structures of FIG. 3).

The three-dimensional object producing apparatus forms a three-dimensional object based on the production data described above. Each production step performed by the three-dimensional object producing apparatus will be described below.

### -Discharging step-

The engine of the three-dimensional object producing apparatus 30 causes the head unit 31 to discharge liquid droplets of the model material 1 and the head unit 32 to discharge liquid droplets of the support material 2 based on the two-dimensional data representing the bottommost cross-section among the input two-dimensional data while moving the carriage 35 or the stage 37.

As a result, the liquid droplets of the model material 1 are disposed at the positions corresponding to the pixels representing the model part in the two-dimensional data representing the bottommost cross-section, and the liquid droplets of the support part 2 are disposed at the positions corresponding to the pixels representing the support part, to form a liquid film in which liquid droplets at the adjoining positions contact each other.

When forming one object, a liquid film having a cross-sectional shape is formed in the center of the stage 37. When forming a plurality of objects, the three-dimensional object producing apparatus 30 may form liquid films of a plurality of cross-sectional shapes over the stage 37, or may stack liquid films over an object formed earlier.

It is preferable to install heaters in the head units 31 and 32. It is also preferable to install pre-heaters on the path through which the model material is supplied to the head unit 31 and on the path through which the support material is supplied to the head unit 32.

### -Smoothing step-

In the smoothing step, the roller 34 scraps away excessive portions of the model material and support material discharged onto the stage 37, to smooth the liquid film formed of the model material and the support material, or any bosses and recesses of the layer. The smoothing step may be performed each time one layer is laminated in the Z axis direction or may be performed once every time two to fifty layers are laminated.

In the smoothing step, the roller 34 may be stopped, or may be rotated at a positive or negative relative speed with respect to the travelling direction of the stage 37. The rotation seed of the roller 34 may be constant, or constant acceleration, or constant deceleration. The rotation number of the roller 34 expressed as the absolute value of the relative speed with respect to the stage 37 is preferably 50 mm/s or greater but 400 mm/s or less. When the relative speed is extremely low, smoothing is insufficient and smoothness is spoiled. When the relative speed is extremely high, the apparatus needs size increase, and the liquid droplets discharged tend to come out of place due to, for example, vibration. As a result, smoothness may be reduced.

In the smoothing step, it is preferable that the rotation direction of the roller 34 be opposite to the travelling direction of the head units 31 and 32.

### -Curing step-

The curing step is a step of curing object forming layers formed in the model part forming step and the support part forming step.

In the curing step, the engine of the three-dimensional object producing apparatus 30 causes the carriage 35 to move the ultraviolet irradiator 33 to irradiate the liquid film formed in the liquid film forming step with ultraviolet rays corresponding to the wavelength of the photopolymerization initiator contained in the model material and the support material. In this way, the three-dimensional object producing apparatus 30 cures the liquid film and forms a layer.

### -Layer laminating step-

After the bottommost layer is formed, the engine of the three-dimensional object producing apparatus 30 lowers the stage by one layer.

The engine of the three-dimensional object producing apparatus 30 causes liquid droplets of the model material 1 and liquid droplets of the support material 2 to be discharged based on the two-dimensional image data representing the second cross-section from the bottommost side while moving the carriage 35 and the stage 37. The discharging method is the same as when the bottommost liquid film is formed. As a result, a liquid film having the cross-sectional shape represented by the second two-dimensional data from the bottommost side is formed over the bottommost layer. Then, the engine of the three-dimensional object producing apparatus 30 causes the carriage 35 to move the ultraviolet irradiator 33 to irradiate the liquid film with ultraviolet rays, to cure the liquid film and form the second layer from the bottommost side over the bottommost layer.

The engine of the three-dimensional object producing apparatus 30 repeats formation and curing of a liquid film in the same manner as described above, using the input two-dimensional data in the order of the data closer to the bottommost side, to laminate layers. The number of times of repetition is different depending on, for example, the number of the input two-dimensional image data, or the height and shape of the three-dimensional model. When object formation using all of the two-dimensional image data is completed, an object formed of a model part in a state of being supported by a support part is obtained.

### -Removing step-

The object formed by the three-dimensional object producing apparatus 30 includes a model part and a support part. The support part is removed from the object after object formation. Examples of the removing method include physical removal and chemical removal. In physical removal, a mechanical force is applied for removal. On the other hand, in chemical removal, the object is dipped in a solvent to disintegrate and remove the support part. The method for removing the support part is not particularly limited, but chemical removal is preferred because physical removal may break the object. Moreover, when taking costs into consideration, the removing method by water dipping is more preferred. When the removing method by water dipping is employed, a support material of which cured product has water disintegrability is selected.

When a model part is soft like a hydrogel and the shape of the model part is affected by water, a method of using a phase change-type support material and dissolving the support material by heat is preferable.

### (Three-dimensional object producing program)

A three-dimensional object producing program of the present disclosure causes a computer to execute a model part forming process of forming a model part formed of a model material, a support part forming process of forming a support part formed of a support material for supporting the model part, and a process of disposing the model material in the support part in the support part forming process to form a detachment preventing part for preventing detachment of the model part in a manner that the detachment preventing part is continuous from the model part.

The three-dimensional object producing program may cause a computer to execute other processes in addition to the processes described above.

Examples of the other processes include a process of flattening a layer formed of an object forming material discharged, a process of irradiating an object forming material discharged with active energy rays for curing, a process of washing an object formed, and a process of drying the object formed.

The three-dimensional object producing program of the present disclosure realizes the three-dimensional object producing apparatus of the present disclosure by using, for example, a computer as a hardware resource. Hence, a preferred embodiment of the three-dimensional object producing program of the present disclosure may be the same as, for example, the preferred embodiment of the three-dimensional object producing apparatus of the present disclosure.

The three-dimensional object producing program of the present disclosure may be generated using various known programming languages depending on the configuration of the computer system used and the type and version of the operating system.

The three-dimensional object producing program of the present disclosure may be recorded in a recording medium such as a built-in hard disk and an external hard disk, or may be recorded in a recording medium such as a CD-ROM, a DVD-ROM, a MO disk, and a USB memory. These recording media may be a storage unit included in a control unit.

When the three-dimensional object producing program of the present disclosure is recorded in the recording medium described above, the three-dimensional object producing program of the present disclosure can be used on an as-needed basis instantly from a recording medium reading device included in the computer system or via installation into a hard disk from the recording medium reading device. The three-dimensional object producing program of the present disclosure may be recorded in an external storage area (e.g., any other computer) that can be accessed by the computer system through an information communication network. In this case, the three-dimensional object producing program of the present disclosure stored in the external storage area can be used on an as-needed basis instantly from the external storage area through the information communication network or via installation into a hard disk from the external storage area.

The three-dimensional object producing program of the present disclosure may be recorded in a plurality of recording media dividedly in the units of arbitrarily selected processes.

### (Three-dimensional object producing apparatus)

The three-dimensional object producing apparatus of the present disclosure is loaded with the three-dimensional object producing program of the present disclosure.

The three-dimensional object producing apparatus of the present disclosure is not particularly limited except that the three-dimensional object producing apparatus is loaded with the three-dimensional object producing program of the present disclosure, and may be loaded with, for example, other programs.

### <Computer-readable recording medium>

A computer-readable recording medium of the present disclosure stores the three-dimensional object producing program of the present disclosure.

The computer-readable recording medium of the present disclosure is not particularly limited and may be appropriately selected depending on the intended purpose. Examples of the computer-readable recording medium include a built-in hard disk, an external hard disk, a CD-ROM, a DVD-ROM, a MO disk, and a USB memory.

The computer-readable recording medium of the present disclosure may be embodied by a plurality of recording media storing the three-dimensional object producing program of the present disclosure dividedly in the units of arbitrarily selected processes.

The processes of the three-dimensional object producing program of the present disclosure can be executed by a computer including a control unit that constitutes the three-dimensional object producing apparatus of the present disclosure.

The computer is not particularly limited and may be appropriately selected depending on the intended purpose so long as the computer is an apparatus including devices for, for example, storage, computing, and control. Examples of the computer include a personal computer.

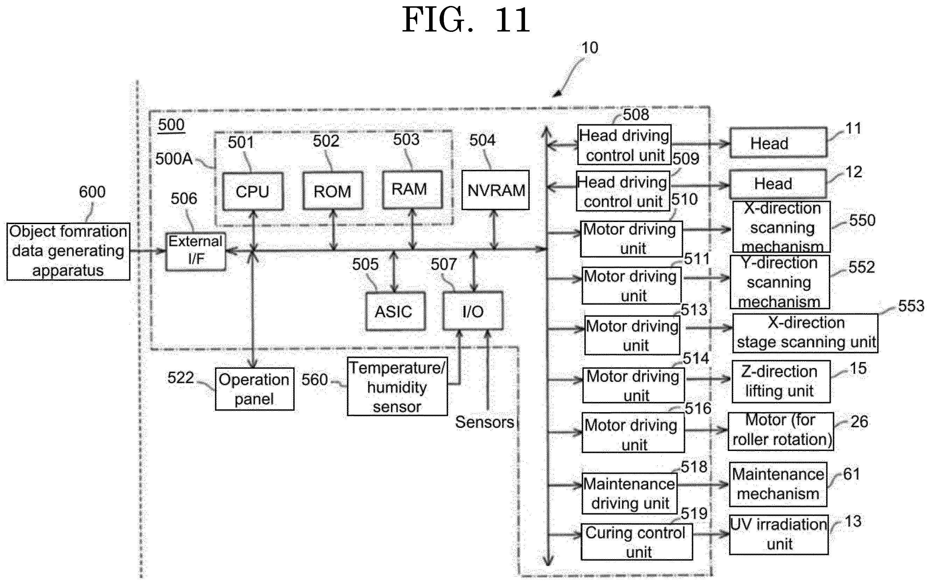

The outline of the control unit of the three-dimensional object producing apparatus will be described with reference to FIG. 11. FIG. 11 is a block diagram of the control unit of the three-dimensional object producing apparatus.

The control unit 500 includes a main control unit 500A including a CPU 501 configured to control the whole three-dimensional object producing apparatus, a ROM 502 storing the three-dimensional object producing program of the present disclosure to be executed by the CPU 501 and other fixed data, and a RAM 503 configured to temporarily store, for example, object formation data.

The control unit 500 includes a nonvolatile memory (NVRAM) 504 configured to retain data also while the power to the apparatus is shut off. The control unit 500 also includes an ASIC 505 configured to execute image processing in which various signal processes on image data are performed, and to process other input/output signals for controlling the whole apparatus.

The control unit 500 also includes an I/F 506 configured to exchange data and signals that are to be used when receiving object formation data from an external object formation data generating apparatus 600.

The object formation data generating apparatus 600 is an apparatus configured to generate object formation data (cross-section data), which are slice data obtained by slicing an object (three-dimensional object) in a final form in the unit of each object forming layer. An information processing apparatus such as a personal computer constitutes the object formation data generating apparatus 600.

The control unit 500 includes an I/O 507 configured to receive sensing signals from various sensors.

The control unit 500 also includes a head driving control unit 508 configured to drive and control a first head 11 of an object forming unit 20, and a head driving control unit 509 configured to drive and control a second head 12.

The control unit 500 also includes a motor driving unit 510 configured to drive a motor constituting an X-direction scanning mechanism 550 configured to move the object forming unit 20 in the X direction, and a motor driving unit 511 configured to drive a motor constituting a Y-direction scanning mechanism 552 configured to move the object forming unit 20 in the Y direction (sub-scanning direction).

The control unit 500 also includes a motor driving unit 513 configured to drive a motor constituting an X-direction stage scanning unit 553 configured to move the stage 14 in the X direction together with a lifting unit 15, and a motor driving unit 514 configured to drive a motor constituting the lifting unit 15 configured to move the stage 14 upward and downward in the Z direction. Alternatively, the object forming unit 20 may be moved upward and downward in the Z direction, as described above.

The control unit 500 includes a motor driving unit 516 configured to drive a motor 26 configured to rotate and drive a flattening roller 16, and a maintenance driving unit 518 configured to drive a maintenance mechanism 61 for the first head 11 and the second head 12.

The control unit 500 includes a curing control unit 519 configured to control ultraviolet irradiation by the UV irradiation unit 13.

Sensing signals of a temperature and humidity sensor 560 configured to detect temperature and humidity as the environmental conditions of the apparatus and sensing signals of other sensors are input into the I/O 507 of the control unit 500.

An operation panel 522 configured for entry and display of necessary information for the apparatus is coupled to the control unit 500.

As described above, the control unit 500 receives object formation data from the object formation data generating apparatus 600. The object formation data are data (data of object forming regions) based on which objects 17 inside respective object forming layers 30 are formed, and are in the form of slice data obtained by slicing the shape of an intended three-dimensional object.

The main control unit 500A generates data obtained by adding data of support regions to which the support material is to be applied, to the object formation data (data of object forming regions), and sends the generated data to the head driving control units 508 and 509. The head driving control units 508 and 509 cause the first head 11 to discharge liquid droplets of the model material 301 to an object forming region and the second head 12 to discharge liquid droplets of the liquid-state support material 302 to a support region, respectively.

The object formation data generating apparatus 600 and the three-dimensional object producing apparatus 10 constitute a producing apparatus.

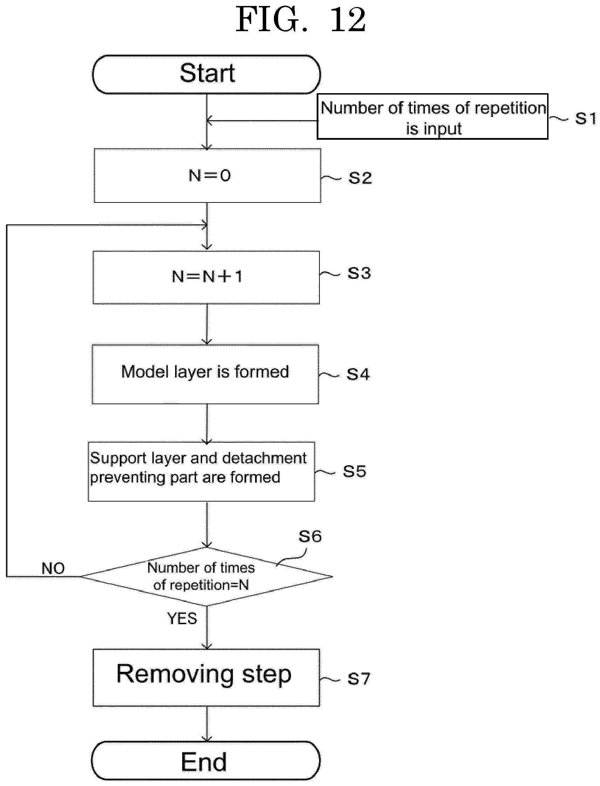

FIG. 12 is a flowchart illustrating an example of the flow of the processes of the three-dimensional object producing program of the present disclosure. The flow of the processes of the three-dimensional object producing method will be described below with reference to FIG. 12.

In the step S1, the three-dimensional object producing apparatus 10 receives the number of times of repetition, and moves the flow to S2.

In the step S2, the control unit 500 of the three-dimensional object producing apparatus 10 sets N=0, and moves the flow to S3.

In the step S3, the control unit 500 of the three-dimensional object producing apparatus 10 sets N=N+1, and moves the flow to S4.

In the step S4, the control unit 500 of the three-dimensional object producing apparatus 10 forms a model layer, and moves the flow to S5. The discharging unit of the three-dimensional object producing apparatus discharges the model material based on the object formation data, and the UV irradiation unit irradiates and cures the model material with ultraviolet rays, to form a model layer.

In the step S5, the control unit 500 of the three-dimensional object producing apparatus 10 forms a support layer and a detachment preventing part, and moves the flow to S6. The discharging unit of the three-dimensional object producing apparatus discharges the support material based on the object formation data, and the UV irradiation unit irradiates and cures the support material with ultraviolet rays, to form a support layer. Together with formation of the support layer, the model material is discharged to a predetermined position based on the object formation data, to form a layer constituting a detachment preventing part continuous from the model part.

In the step S6, the control unit 500 of the three-dimensional object producing apparatus 10 moves the flow to S3 when the number of times of repetition is not N, and moves the flow to S7 when the number of times of repetition is N. When N reaches the number of times of repetition, object formation is completed.

In the step S7, the removing step is performed after object formation is completed, and the flow is completed. In the removing step, the support part is removed from the model part and the support part after completion of object formation, and the columnar structures are removed from the model part.

### EXAMPLES

The present disclosure will be described below by way of Examples. The present disclosure should not be construed as being limited to these Examples.

### (Model material preparation example)

Ion-exchanged water having been subjected to pressure-reducing deaeration for 10 minutes will be referred to as "pure water" below.

First, as an initiator liquid, an aqueous liquid was prepared by dissolving 1-hydroxycyclohexyl phenyl ketone (product name: IRGACURE 184, obtained from BASF GmbH) (2 parts by mass) in pure water (98 parts by mass).

Next, to pure water (195 parts by mass) under stirring, synthetic hectorite (LAPONITE XLG, obtained from Rockwood) (8 parts by mass) was added little by little as a layered clay mineral and stirred, to produce a dispersion liquid.

Next, as a polymerizable monomer, N,N-dimethyl acrylamide (obtained from FUJIFILM Wako Pure Chemical Corporation) (20 parts by mass) passed through an active alumina column for removing a polymerization inhibitor was added to the dispersion liquid.

Next, as a surfactant, sodium dodecyl sulfate (obtained from FUJIFILM Wako Pure Chemical Corporation) (0.2 parts by mass) was added and mixed with the resultant.

Next, the initiator liquid (5 parts by mass) was added, stirred and mixed with the resultant, followed by pressure-reducing deaeration for 10 minutes, to prepare a model material.

### (Support material preparation example)

As monomers, dodecyl acrylate (obtained from Tokyo Chemical Industry Co., Ltd.) (29 parts by mass) and stearyl acrylate (obtained from Tokyo Chemical Industry Co., Ltd.) (29 parts by mass) were stirred. Subsequently, as a photopolymerization initiator, 1-hydroxycyclohexyl phenyl ketone (2 parts by mass) was added and stirred with the resultant. Moreover, 1-dodecanol was added to the resultant, to prepare a support material.

### (Example 1)

The obtained model material and support material were filled into tanks coupled to inkjet heads (product name: MH2420, obtained from Ricoh Industry Co., Ltd.) of a three-dimensional object producing apparatus of a material jetting type.

### <Test conditions>

As the test conditions, the resolution at which the model material and the support material would be discharged was set to 1,200 dpi × 300 dpi, and the layer lamination pitch (film thickness per layer) was set to 20 micrometers.

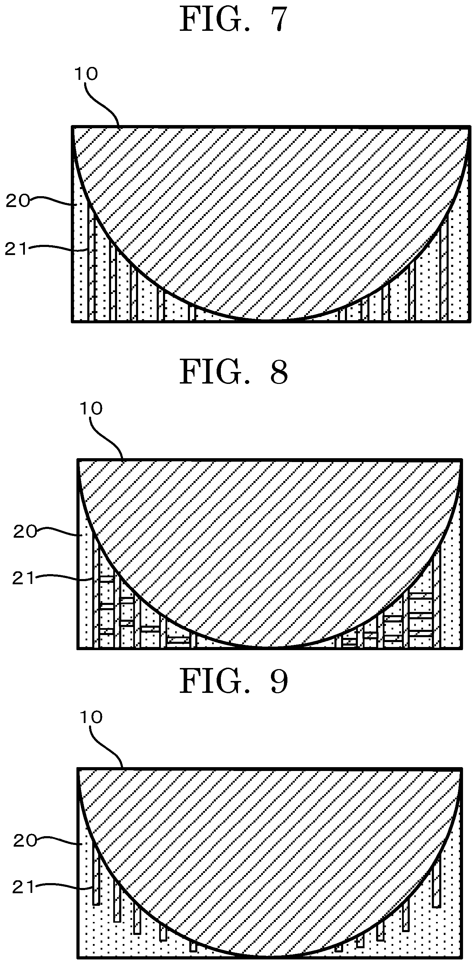

A sphere having a diameter of 100 mm illustrated in FIG. 6 was formed with the model material. A support part 20 was formed at where a hemispherical portion of the sphere was orthographically projected. In the support part 20 in the orthogonally projected region, columnar structures 21 having a diameter of 1 mm were formed at a density of 10 columns/cm² in a manner that the columnar structures would couple to the model material. FIG. 7 illustrates a cross-section when object formation had reached a height of 50 mm. As illustrated in FIG. 7, in Example 1, the columnar structures 21 were formed in a manner to penetrate the support part 20.

### (Example 2)

A hemispherical model (three-dimensional object) was formed with formation of a support part in the same manner as in Example 1, except that unlike in Example 1, bridging structures formed of columnar structures having a diameter of 1 mm were formed between adjoining columnar structures as illustrated in FIG. 8.

### (Example 3)

A hemispherical model (three-dimensional object) was formed with formation of a support part in the same manner as in Example 1, except that unlike in Example 1, columnar structures were formed halfway into the support part (by half the length of the columnar structures of Example 1) as illustrated in FIG. 9.

### (Example 4)

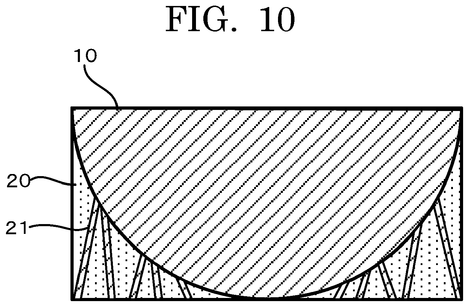

A hemispherical model (three-dimensional object) was formed with formation of a support part in the same manner as in Example, 1, except that unlike in Example 1, columnar structures were formed in a direction oblique to the model part as illustrated in FIG. 10.

### (Comparative Example 1)

A hemispherical model (three-dimensional object) was formed with formation of a support part in the same manner as in Example 1, except that unlike in Example 1, no columnar structures were formed.

Next, Examples 1 to 4 and Comparative Example 1 were subjected to "Evaluation of warpage appearance of three-dimensional object during and after object formation" and "Evaluation of warpage of three-dimensional object using clearance gauge" in the manners described below. The results are presented in Table 1.

### <Evaluation of warpage appearance of three-dimensional object during and after object formation>

The three-dimensional object producing apparatus was stopped when the layer lamination height reached 5 mm from when object formation was started, and warpage appearance of the three-dimensional object during object formation was visually observed. In addition, warpage appearance of the three-dimensional object after object formation was visually observed. Warpage appearance was evaluated according to the evaluation criteria described below.

### [Evaluation criteria]

A: No warpage of the model part was observed.
B: Warpage of the model part was observed.

### <Evaluation of warpage of three-dimensional object using clearance gauge>

A clearance gauge (FEELER GAUGE TYPE A, obtained from Nagai Gauge Co., Ltd.) was inserted at the shorter side of the three-dimensional object, to measure the degree of warpage of the three-dimensional object from which the support part was removed after object formation, and evaluate the degree of warpage according to the evaluation criteria described below.

### [Evaluation criteria]

A: The clearance was 0.1 mm or less.
B: The clearance was greater than 1 mm.

**Table 1**

| | Evaluation of warpage appearance | Evaluation of warpage by clearance gauge (after object formation) | |
|---|---|---|---|
| | (during and after object formation) | Amount of warpage | Evaluation |
| Ex. 1 | A | 0.95 mm | A |
| Ex. 2 | A | 0.88 mm | A |
| Ex. 3 | A | 0.10 mm | A |
| Ex. 4 | A | 0.92 mm | A |
| Comp. Ex. 1 | B | >1 mm | B |

As can be seen from the results of Table 1, in the evaluation of warpage appearance of Examples 1 to 4, it was successfully confirmed that the three-dimensional objects during and after object formation had no warpage. In the clearance gauge evaluation of the three-dimensional objects of Examples 1 to 4, it turned out that three-dimensional objects with little warpage were successfully formed.

As compared, in Comparative Example 1, warpage occurred during object formation and the model part detached from the support part.

Aspects of the present disclosure are, for example, as follows.
<1> A three-dimensional object producing method including:
   forming a model part formed of a model material: and
   forming a support part formed of a support material for supporting the model part,
   wherein in the forming a support part, the model material is disposed in the support part, to form a detachment preventing part for preventing detachment of the model part in a manner that the detachment preventing part is continuous from the model part.
<2> The three-dimensional object producing method according to <1>,
   wherein the support part is formed over a stage, and the detachment preventing part is free of contact with the stage.
<3> The three-dimensional object producing method according to <1> or <2>,
   wherein the detachment preventing part includes a plurality of columnar structures.
<4> The three-dimensional object producing method according to <3>,
   wherein a bridging structure is formed between adjoining ones of the columnar structures.
<5> The three-dimensional object producing method according to any one of <1> to <4>,
   wherein the model material and the support material are curable liquid materials.
<6> A three-dimensional object producing program causing a computer to execute a process including:
   forming a model part formed of a model material: and
   forming a support part formed of a support material for supporting the model part,
   wherein the forming a support part includes disposing the model material in the support part, to form a detachment preventing part for preventing detachment of the model part in a manner that the detachment preventing part is continuous from the model part.
<7> A three-dimensional object producing apparatus including
   the three-dimensional object producing program according to <6>.

The three-dimensional object producing method according to any one of <1> to <5>, the three-dimensional object producing program according to <6>, and the three-dimensional object producing apparatus according to <7> can solve the various problems in the related art and achieve the object of the present disclosure.

## Claims

1. A three-dimensional object producing method comprising:
forming a model part formed of a model material: and
forming a support part formed of a support material for supporting the model part,
wherein in the forming a support part, the model material is disposed in the support part, to form a detachment preventing part for preventing detachment of the model part in a manner that the detachment preventing part is continuous from the model part.

2. The three-dimensional object producing method according to claim 1,
wherein the support part is formed over a stage, and the detachment preventing part is free of contact with the stage.

3. The three-dimensional object producing method according to claim 1 or 2,
wherein the detachment preventing part comprises a plurality of columnar structures.

4. The three-dimensional object producing method according to claim 3,
wherein a bridging structure is formed between adjoining ones of the columnar structures.

5. The three-dimensional object producing method according to any one of claims 1 to 4,
wherein the model material and the support material are curable liquid materials.

6. A three-dimensional object producing program causing a computer to execute a process comprising:
forming a model part formed of a model material: and
forming a support part formed of a support material for supporting the model part,
wherein the forming a support part comprises disposing the model material in the support part, to form a detachment preventing part for preventing detachment of the model part in a manner that the detachment preventing part is continuous from the model part.

7. A three-dimensional object producing apparatus comprising the three-dimensional object producing program according to claim 6.
